(19) **Europäisches Patentamt / European Patent Office / Office européen des brevets**

(11) **EP 1 846 341 B1**

(12) **FASCICULE DE BREVET EUROPEEN**

(45) Date de publication et mention de la délivrance du brevet:
**08.04.2020 Bulletin 2020/15**

(21) Numéro de dépôt: **06709481.3**

(22) Date de dépôt: **06.02.2006**

(51) Int Cl.:
*C03C 4/08* (2006.01)     *C03C 3/087* (2006.01)
*C03C 3/091* (2006.01)     *C03C 3/095* (2006.01)

(86) Numéro de dépôt international:
**PCT/FR2006/050102**

(87) Numéro de publication internationale:
**WO 2006/085022 (17.08.2006 Gazette 2006/33)**

(54) **COMPOSITION DE VERRE DESTINEE A LA FABRICATION DE VITRAGES ABSORBANT LES RADIATIONS ULTRAVIOLETTES ET INFRAROUGES.**

GLASZUSAMMENSETZUNG ZUR HERSTELLUNG VON ULTRAVIOLETT- UND INFRAROTSTRAHLUNG ABSORBIERENDER VERGLASUNG

GLASS COMPOSITION FOR PRODUCTION OF GLAZING ABSORBING ULTRAVIOLET AND INFRARED RADIATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.02.2005 FR 0550362**

(43) Date de publication de la demande:
**24.10.2007 Bulletin 2007/43**

(73) Titulaire: **Saint-Gobain Glass France S.A.**
**92400 Courbevoie (FR)**

(72) Inventeur: **TEYSSEDRE, Laurent**
**F-75013 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A- 0 745 566**     **WO-A-91/07356**
**WO-A-94/25407**     **WO-A-03/051786**
**US-A- 5 897 956**

• **PATENT ABSTRACTS OF JAPAN vol. 2002, no. 02, 2 avril 2002 (2002-04-02) & JP 2001 270735 A (CENTRAL GLASS CO LTD), 2 octobre 2001 (2001-10-02)**

Remarques:
Le dossier contient des informations techniques présentées postérieurement au dépôt de la demande et ne figurant pas dans le présent fascicule.

**Description**

L'invention se rapporte à une composition de verre de type silico-sodo-calcique absorbant les radiations infrarouges et ultraviolettes. Plus précisément, l'invention concerne une composition de verre pour la réalisation de verres plats par flottage sur un bain de métal fondu tel que l'étain (procédé "float"), ces verres plats étant destinés notamment, mais pas exclusivement, à former des pare-brise et des vitrages latéraux situés à l'avant d'un véhicule.

Les vitrages automobiles sont soumis à des exigences très strictes. En matière de propriétés optiques, ces exigences sont parfois régies par voie de réglementation, par exemple lorsqu'il s'agit de la transmission lumineuse d'un pare-brise. Ainsi, un vitrage destiné à la réalisation d'un pare-brise doit-il présenter un facteur de transmission lumineuse globale sous illuminant A ($TL_A$) au moins égale à 75 %. Les vitrages destinés à la réalisation des latéraux avant doivent présenter, dans les mêmes conditions, un facteur $TL_A$ au moins égal à 70 %. La transmission énergétique des vitrages est souvent réduite pour améliorer le confort thermique de l'usager ou pour diminuer l'émission de gaz nocifs pour l'environnement grâce à la réduction de la consommation des véhicules qui sont équipés de climatiseurs. Pour éviter la dégradation des garnitures intérieures, les constructeurs automobiles demandent que les vitrages présentent également une faible transmission des radiations ultraviolettes. Les vitrages qui ont la faculté d'absorber à la fois dans les parties du spectre lumineux correspondant aux infrarouges et aux ultraviolets satisfont donc à ces exigences.

Ces vitrages sont couramment fabriqués par le procédé « Float » qui comprend la fusion des matières vitrifiables et le flottage du verre en fusion sur un bain de métal fondu, en général de l'étain, pour former un ruban de verre. Ce ruban est ensuite découpé en feuilles qui peuvent subséquemment être bombées ou subir un traitement de renforcement de leurs propriétés mécaniques, par exemple une trempe thermique ou chimique.

Les compositions qui conviennent à la production du verre flotté sont généralement composées d'une matrice verrière du type silico-sodo-calcique, et comprennent fréquemment des agents absorbant dans certaines régions du spectre optique (agents colorants et/ou absorbant le rayonnement infrarouge et/ou ultraviolet).

La matrice silico-sodo-calcique utilisée traditionnellement pour ce type de verre comprend les constituants suivants (en pourcentages massiques) :

| | |
|---|---|
| $SiO_2$ | 60 à 75 % |
| $Al_2O_3$ | 0 à 5 % |
| BaO | 0 à 5 % |
| CaO | 5 à 16 % |
| MgO | 0 à 10 % |
| $Na_2O$ | 10 à 20 % |
| $K_2O$ | 0 à 10 % |

L'agent absorbant optique le plus courant est le fer, présent dans le verre à la fois sous forme d'ion ferrique, lequel absorbe le rayonnement ultraviolet, et sous forme d'ion ferreux, qui absorbe principalement le rayonnement infrarouge. Les verres contenant uniquement du fer comme agent absorbant optique présentent habituellement une coloration verte due à la présence des deux formes ioniques précitées : un contrôle précis des quantités relatives en fer ferrique et en fer ferreux (et donc du « redox », défini comme la quantité massique de fer ferreux exprimée en FeO rapportée à la quantité massique de fer total exprimée en $Fe_2O_3$) permet d'atteindre la coloration et les performances optiques désirées.

Il est apparu toutefois que la protection contre les rayonnements ultraviolets assurée par l'oxyde de fer seul peu s'avérer insuffisante. Pour pallier cet inconvénient, il a été proposé d'ajouter à la matrice verrière des agents absorbant spécifiquement dans l'UV, tels que l'oxyde de cérium ($CeO_2$) ou l'oxyde de titane ($TiO_2$).

Ainsi dans WO-A-91/07356 sont proposés des verres silico-sodo-calciques de 3 à 5 mm d'épaisseur dont les propriétés de transmission infrarouge et ultraviolette sont obtenues grâce à l'ajout de 0,7 à 1,25 % d'oxyde de fer associant une valeur de redox de 0,23 à 0,29, de $CeO_2$ et, optionnellement, $TiO_2$. Les verres décrits sont constitués d'une matrice silico-sodo-calcique traditionnelle comprenant de l'oxyde de magnésium en une quantité supérieure à 3 %.

Dans EP-A-469 446 sont également décrits des verres de matrice silico-sodo-calcique standard. Leurs propriétés optiques sont obtenues grâce à des verres de redox inférieur à 0,275, de teneur totale en oxyde de fer supérieure à 0,85 % et avec une teneur limitée en $CeO_2$, inférieure à 0,5 %. Les verres décrits sont des verres riches en oxyde de fer et oxydés, donc économiques car exploitant au maximum la capacité d'absorption des rayons ultraviolets par le fer ferrique afin d'ajouter une quantité minimale en $CeO_2$. Un inconvénient des verres oxydés réside toutefois dans leur moindre absorption dans l'infrarouge, cette dernière étant assurée par l'ion ferreux.

WO-A-94/14716 décrit des verres dont la composition de la matrice est modifiée afin leur conférer une plus grande absorption dans l'infrarouge et une plus faible absorption dans le visible, donc une sélectivité dans l'infrarouge (c'est-à-dire le rapport de la transmission lumineuse sur la transmission énergétique) accrue. Une caractéristique essentielle de ces matrices est leur faible quantité de MgO (de 0 à 2 %). Les verres décrits possèdent un redox compris entre 0,28 et 0,30 et présentent pour certains de bonnes propriétés d'absorption du rayonnement ultraviolet grâce à l'ajout d'oxyde de cérium.

Le brevet US 6 133 179 décrit l'usage d'oxyde de tungstène $WO_3$ dans des verres de différentes matrices, dont la matrice modifiée décrite dans la demande WO-A-94/14716 susmentionnée, afin d'obtenir de faibles valeurs de transmission ultraviolette.

Les verres précités ont pour inconvénient majeur d'avoir un prix de revient élevé du fait qu'ils renferment de l'oxyde de cérium, éventuellement de l'oxyde de titane et/ou de l'oxyde de tungstène, lesquels oxydes sont très onéreux. Bien que présents en faibles quantités, ces oxydes contribuent en effet à augmenter le coût du verre de manière significative.

La présente invention a pour but de fournir une composition de verre de type silico-sodo-calcique à la fois économique et permettant de former un verre possédant des propriétés de transmission dans le visible, l'infrarouge et l'ultraviolet au moins équivalentes à celles des compositions connues utilisables en tant que vitrage automobile, notamment de pare-brise et latérales situées à l'avant du véhicule.

Un autre but de l'invention est de proposer une composition de verre susceptible d'être mise en œuvre dans les conditions du procédé « float » opérant par flottage du verre sur un bain de métal fondu.

Ces buts sont atteints selon la présente invention par la composition selon la revendication 1.

On convient ici que la composition de verre silico-sodo-calcique peut comprendre, outre les impuretés inévitables, une faible proportion (jusqu'à 1 %) d'autres constituants par exemple des agents aidant à la fusion ou à l'affinage du verre ($SO_3$, Cl, $Sb_2O_3$, $As_2O_3$) ou provenant d'un ajout éventuel de calcin recyclé dans le mélange vitrifiable.

Dans le contexte de l'invention, par "rédox" on entend le rapport de la teneur pondérale de l'oxyde ferreux exprimé sous forme de FeO à la teneur pondérale en fer total exprimé sous forme d'oxyde $Fe_2O_3$.

Les verres selon l'invention présentent une transmission lumineuse ($TL_A$) supérieure ou égale à 65 %, notamment 70 % et une transmission énergétique (TE) inférieure ou égale à 46 %, voire à 44 % et même à 43 % pour une épaisseur de 3 à 5 mm. Conformément à l'invention, on définit la transmission lumineuse ($TL_A$) comme étant calculée en utilisant l'illuminant A, la transmission ultraviolette (TUV) étant calculée selon la norme ISO 9050, et la transmission énergétique (TE) calculée en utilisant la distribution spectrale solaire de Parry Moon (masse d'air = 2).

La sélectivité est définie comme étant le rapport de la transmission lumineuse (TLA) sur la transmission énergétique (TE) pour une épaisseur donnée.

La composition selon l'invention permet d'obtenir un verre présentant une sélectivité élevée, ce qui est particulièrement avantageux lorsque celui-ci est destiné à former des vitrages pour l'automobile. Un tel verre permet en effet de limiter l'échauffement lié au rayonnement solaire et d'accroître de ce fait le confort thermique dans l'habitacle. De préférence, la sélectivité du verre pour une épaisseur variant de 3 à 5 mm est égale ou supérieure à 1,60, voire 1,62, et mieux encore est supérieure ou égale à 1,65.

La composition selon l'invention permet d'obtenir un verre possédant, pour une épaisseur variant de 3 à 5 mm, une TUV au plus égale à 14 %, notamment 12 % et même à 10 %.

Dans les verres selon l'invention, la silice $SiO_2$ est généralement maintenue dans des limites très étroites pour les raisons suivantes : au-dessus d'environ 80 %, la viscosité du verre et son aptitude à la dévitrification augmentent fortement ce qui rend plus difficile sa fusion et sa coulée sur un bain d'étain fondu, et au-dessous de 65 %, la résistance hydrolytique du verre décroît rapidement et la transmission dans le visible diminue également.

Les oxydes alcalins $Na_2O$ et $K_2O$ facilitent la fusion du verre et permettent d'ajuster sa viscosité aux températures élevées afin de la maintenir proche de celle d'un verre standard. $K_2O$ peut être utilisé jusqu'à 5 % environ car au-delà se pose le problème du coût élevé de la composition. Par ailleurs, l'augmentation du pourcentage de $K_2O$ ne peut se faire, pour l'essentiel, qu'au détriment de $Na_2O$ ce qui contribue à augmenter la viscosité. La somme des teneurs en $Na_2O$ et $K_2O$, exprimées en pourcentages pondéraux, est de préférence égale ou supérieure à 10 %, et avantageusement inférieure à 20 %, notamment inférieure ou égale à 15 %, voire à 14 %. Il apparaît en effet qu'en deçà de 15 %, les ions ferriques aient un environnement chimique modifié, accroissant leur capacité à absorber le rayonnement ultraviolet, ce qui compense notamment l'absence d'oxyde de tungstène.

Les oxydes alcalino-terreux permettent d'adapter la viscosité du verre aux conditions d'élaboration du verre.

MgO joue également un rôle particulièrement important dans les propriétés de transmission des verres, du fait de son effet de modification de la forme de la bande d'absorption du fer ferreux. Sa teneur doit impérativement être inférieure ou égale à 2 %. De manière préférée, la teneur en MgO des verres selon l'invention est inférieure ou égale à 1 %, ou même inférieure ou égale à 0,5 %.

CaO permet de diminuer la viscosité du verre à haute température et d'augmenter sa résistance hydrolytique. La compensation de la baisse de MgO se fait de préférence sur l'oxyde CaO, plutôt que sur $SiO_2$ et $Na_2O$, respectivement pour des raisons de viscosité et de coût. Pour ces différentes raisons, la teneur en CaO est de préférence supérieure ou égale à 9 %, de préférence encore supérieure à 10,5 %.

BaO permet d'augmenter la transmission lumineuse et il peut être ajouté dans la composition selon l'invention dans une teneur inférieure à 5 %. BaO a une influence beaucoup plus faible que MgO et CaO sur la viscosité du verre et l'augmentation de sa teneur se fait essentiellement au détriment des oxydes alcalins, de MgO et surtout de CaO. Toute augmentation importante de BaO contribue donc à augmenter la viscosité du verre, notamment aux basses températures. De manière préférée, les verres selon l'invention sont exempts de BaO.

Outre le respect des limites définies précédemment pour la variation de la teneur de chaque oxyde alcalino-terreux, il est préférable pour obtenir les propriétés de transmission recherchées, de limiter la somme des pourcentages pondéraux de MgO, CaO et BaO à une valeur égale ou inférieure à 15 %.

L'utilisation des agents absorbants dans les limites de l'invention permet d'ajuster au mieux les propriétés optiques du verre et de conférer les performances recherchées.

Comme indiqué précédemment, l'oxyde de fer est présent sous forme d'ions ferrique et ferreux. Les ions ferriques absorbent dans l'ultraviolet et confèrent une légère coloration jaune au verre, tandis que les ions ferreux absorbent fortement dans l'infrarouge tout en colorant le verre en bleu. Le redox joue un rôle déterminant dans l'obtention des propriétés du verre de la présente invention. Dans les conditions de redox habituellement pratiquées dans le cadre d'une installation « float », et en l'absence d'autres colorants, les verres contenant de l'oxyde de fer présentent une coloration verte comme déjà explicité. Les propriétés optiques du fer ferreux sont dues à une bande d'absorption présentant son maximum d'absorption autour d'une longueur d'onde allant de 1000 à 1100 nm (donc dans le domaine infrarouge), et s'étendant dans le domaine des longueurs d'onde visibles. L'effet de la modification de la matrice vitreuse tel que décrit dans la demande WO-A-94/14716, et notamment de la diminution de la teneur en MgO dans la matrice vitreuse, est de modifier la forme de cette bande d'absorption, en particulier en la décalant vers l'infrarouge. Il en résulte des verres présentant une plus forte sélectivité infrarouge, soit une plus faible transmission énergétique que celle des verres à matrice standard, pour une transmission lumineuse équivalente.

Les inventeurs ont découvert de manière surprenante qu'en élaborant le verre à matrice modifiée dans des conditions oxydantes (à un redox inférieur ou égal à 0,19) avec une teneur en fer particulière, il est possible d'obtenir des verres ayant des propriétés de transmission lumineuse, énergétique et ultraviolette similaires à celles de verres à matrice standard, mais plus économiques du fait qu'il n'est pas nécessaire d'utiliser une quantité d'oxyde de cérium et/ou d'oxyde de titane aussi importante. L'effet de la composition de la matrice, et notamment de la faible teneur en MgO sur l'obtention de propriétés optiques de même degré que celles présentées par un verre traditionnel en utilisant une moindre teneur en oxydes de cérium et/ou de titane s'est révélé être tout à fait inattendu.

Conformément à l'invention, la teneur en oxyde de fer peut varier de 0,7 à 1,6 %. Lorsque la teneur est inférieure à 0,7 %, la transmission des verres obtenus est trop élevée, notamment dans les domaines infrarouge et ultraviolet. Une teneur supérieure à 1,6 % ne permet pas d'avoir une transmission lumineuse satisfaisant les exigences réglementaires pour un usage en tant que pare-brise ou vitrage latéral avant d'automobile. En outre, la fusion de telles compositions à teneur élevée en fer est rendue difficile, notamment lorsqu'elle s'opère en four à flammes du fait de la présence de fer ferreux en quantité importante, ce dernier étant responsable d'une trop faible transmission du rayonnement émis par les flammes dans le bain de verre. De manière préférée, la teneur en oxyde de fer des verres selon l'invention est supérieure ou égale à 0,8 %, avantageusement inférieure ou égale à 1,3 %, et mieux encore inférieure ou égale à 0,95 %.

Le redox du verre est maintenu à une valeur inférieure ou égale à 0,19, pour des raisons liées essentiellement aux propriétés optiques des verres obtenus, mais aussi à la fusion et à l'affinage du verre. Pour contrôler le redox, on peut utiliser des agents oxydants connus tels que le sulfate de sodium, et/ou des agents réducteurs tels que du coke en quantité adéquate. L'avantage économique des verres selon l'invention est à son optimum lorsque les verres sont oxydés, car le principal agent absorbant UV est alors le fer ferrique. Un autre avantage de l'utilisation de verres oxydés dans la production de vitrages à faible transmission UV découle du fait que la trempe thermique permet de diminuer de façon très significative la TUV des vitrages, ce d'autant plus que le verre contient plus de fer ferrique. Le redox des verres selon l'invention est donc maintenu à des teneurs inférieures ou égales à 0,19, de préférence encore inférieures ou égales à 0,18. Les verres très oxydés étant plus difficiles à affiner et présentant une teinte jaune non souhaitée pour des raisons esthétiques, le redox des verres selon l'invention est maintenu de préférence au-delà de 0,12, de préférence au-delà de 0,15.

L'oxyde de cérium $CeO_2$, présent dans le verre sous forme d'ions $Ce^{3+}$ et $Ce^{4+}$, est avantageux car il présente peu d'absorption dans le visible. Du fait de son coût élevé, des teneurs en $CeO_2$ inférieures ou égales à 0,9 %, voire à 0,7 %, et mieux encore à 0,5 % sont préférées.

L'oxyde de titane $TiO_2$ joue un rôle similaire à l'oxyde de cérium lorsqu'il est en présence d'oxyde ferreux FeO. La teneur maximale prévue dans le cadre de l'invention ne dépasse pas 0,1 % pour éviter l'apparition d'une coloration jaune. Une telle valeur correspond à la teneur habituellement rencontrée du fait du degré de pureté des matières premières employées (impuretés inévitables). Avantageusement, la composition de verre selon l'invention est exempte d'oxyde de titane.

La composition de verre selon l'invention peut également contenir d'autres agents colorants permettant d'ajuster la teinte du verre. A titre d'exemple, on peut citer des agents colorants choisis parmi les éléments de transition tels que

CoO, $Cr_2O_3$, NiO, Se, $V_2O_5$, CuO, ou encore parmi les oxydes de terres rares tels que $Er_2O_3$, $La_2O_3$, $Nd_2O_3$. Notamment pour compenser l'éventuelle coloration jaune due à la présence de $TiO_2$ et/ou à une oxydation importante du verre, on peut utiliser jusqu'à 10 ppm d'oxyde de cobalt CoO et/ou jusqu'à 50 ppm d'oxyde de cuivre CuO. De manière générale, la teneur totale en ces agents est inférieure à 0,1 % et le plus souvent la composition ne comprend pas d'autres agents colorants que les oxydes de fer et de cérium.

Une composition particulièrement adaptée à la production d'une feuille de verre relativement mince, d'épaisseur de l'ordre de 3,15 mm, comprend les agents absorbants ci-après dans les limites pondérales suivantes :

| | |
|---|---|
| $Fe_2O_3$ (fer total) | 1,0 à 1,4 % |
| $CeO_2$ | 0,4 à 1,2 % |

Une telle composition possède un redox allant de 0,15 à 0,19 et permet d'obtenir un verre présentant, sous une épaisseur de 3,15 mm, une transmission lumineuse $TL_A$ supérieure à 70 %, une transmission ultraviolette inférieure à 12 % et une sélectivité supérieure à 1,62. Ce verre mince peut être apparié avec un autre verre clair et l'ensemble peut ensuite être laminé pour former un verre feuilleté présentant une transmission lumineuse $TL_A$ supérieure à 70 %.

Une autre composition particulièrement adaptée à la production d'une feuille de verre d'épaisseur de l'ordre de 3,85 mm, utiles pour former des vitrages automobiles, comprend les agents absorbants ci-après dans les limites pondérales suivantes :

| | |
|---|---|
| $Fe_2O_3$ (fer total) | 0,85 à 1,2 % |
| $CeO_2$ | 0,4 à 1% |

Une telle composition possède un redox allant de 0,16 à 0,19 et permet d'obtenir un verre présentant, sous une épaisseur de 3,85 mm, une transmission lumineuse $TL_A$ supérieure à 70 %, une transmission ultraviolette inférieure à 12 % et une sélectivité supérieure à 1,62.

Une autre composition particulièrement adaptée à la production d'une feuille de verre d'épaisseur de l'ordre de 4,85 mm, utiles pour former des vitrages pour des camions ou des autobus, comprend les agents absorbants ci-après dans les limites pondérales suivantes :

| | |
|---|---|
| $Fe_2O_3$ (fer total) | 0,7 à 0,95 % |
| $CeO_2$ | 0,3 à 1 % |

Une telle composition possède un redox allant de 0,18 à 0,19 et permet d'obtenir un verre présentant, sous une épaisseur de 4,85 mm, une transmission lumineuse $TL_A$ supérieure à 70 %, une transmission ultraviolette inférieure à 12 % et une sélectivité supérieure à 1,62.

La composition de verre conforme à l'invention est apte à être fondue dans les conditions de production du verre flotté. La fusion a généralement lieu dans des fours à flamme, éventuellement pourvus d'électrodes assurant le chauffage du verre dans la masse par passage d'un courant électrique entre les deux électrodes. Pour faciliter la fusion, et notamment rendre celle-ci mécaniquement intéressante, la composition de verre présente avantageusement une température correspondant à une viscosité $\eta$ telle que $\log \eta = 2$ qui est inférieure à 1500°C, de préférence une température correspondant à la viscosité $\eta$, exprimée en poise, telle que $\log_\eta = 3,5$, (notée $T(\log \eta = 3,5)$) et une température au liquidus (notée $T_{liq}$) satisfaisant la relation :

$$T(\log \eta = 3,5) - T_{liq} > 20°C,$$

et de préférence la relation :

$$T(\log \eta = 3,5) - T_{liq} > 50°C,$$

L'invention a également pour objet un vitrage, notamment pour automobile comprenant au moins une feuille de verre présentant la composition selon l'invention.

Les exemples de compositions de verre données ci-après permettent de mieux apprécier les avantages de la présente invention.

Dans ces exemples, on indique les valeurs des propriétés suivantes calculées sous une épaisseur donnée à partir d'un spectre expérimental :

- le facteur de transmission lumineuse globale sous illuminant A ($TL_A$) calculé entre 380 et 780 nm. Ce calcul est effectué en prenant en considération l'illuminant A tel que défini par la norme ISO/CIE 10526 et l'observateur de référence colorimétrique C.I.E. 1931 tel que défini par la norme ISO/CIE 10527
- le facteur de transmission énergétique globale ($T_E$) intégrée entre 295 et 2500 nm selon la norme ISO 9050 (PARRY MOON Masse d'air 2)
- la sélectivité (SE), définie par le rapport de la transmission lumineuse totale pour l'illuminant A ($TL_A$) à la transmission énergétique totale ($T_E$)
- le facteur de transmission ultraviolette (TUV), calculé à partir du spectre de transmission du verre entre 290 et 380nm selon la norme ISO 9050
- le redox, défini comme étant le rapport de la teneur massique en Fer ferreux (exprimé en FeO) sur la teneur massique en fer total (exprimé en $Fe_2O_3$).

Pour la détermination du rédox, la teneur en fer total ($Fe_2O_3$) est mesurée par fluorescence X et la teneur en fer ferreux (FeO) est mesurée par chimie utilisant la voie humide ou calculée à partir du spectre en transmission, en utilisant la loi de Beer-Lambert.

Les exemples 1 (selon l'invention) et C2 (exemple comparatif) du tableau 1 illustrent l'avantage des verres selon l'invention en terme d'économie de $CeO_2$ par rapport à des verres de matrice standard. Les deux verres présentent les mêmes propriétés optiques ($TL_A$ = 71,1 %, TE = 43,9 %, TUV = 10,9 %) pour une épaisseur de 3,5 mm et ces trois grandeurs imposent de manière univoque le choix des trois caractéristiques de la composition que sont la teneur en fer total $Fe_2O_3$, le redox, et la teneur en $CeO_2$. Il apparaît clairement que l'exemple selon l'invention est beaucoup plus économique que l'exemple comparatif, la quantité de $CeO_2$ ajoutée pour atteindre la TUV voulue étant plus de deux fois plus faible. A propriétés optiques équivalentes, les verres selon l'invention sont plus riches en fer, plus oxydés et plus économiques que des verres à matrice standard.

Tableau 1

|  | 1 | C2 |
|---|---|---|
| $SiO_2$ (%) | 73,47 | 70,61 |
| $Al_2O_3$ (%) | 0,64 | 0,6 |
| CaO (%) | 9,48 | 8,6 |
| MgO (%) | 0,20 | 3,8 |
| $Na_2O$ (%) | 13,6 | 13,9 |
| $K_2O$ (%) | 0,35 | 0,3 |
| $Fe_2O_3$ (%) | 1,23 | 0,91 |
| Redox | 0,18 | 0,26 |
| $CeO_2$ (%) | 0,50 | 1,28 |

Les tableaux 2, 3, et 4 présentent des exemples de compositions de verres selon l'invention qui conviennent particulièrement à des utilisations en tant que vitrages pour automobile ayant des épaisseurs de 3,85 mm, 3,15 mm et 4,85 mm respectivement. Les exemples 3, 5, 10, 13, 14, 16, 17, 20, 22, 23, 24, 28, 29 et 32 ne sont pas conformes à l'invention.

Chacune des compositions figurant dans ces tableaux a été réalisée à partir de la matrice verrière suivante, dont les teneurs sont exprimées en pourcentages pondéraux, celle-ci étant corrigée au niveau de la silice pour s'adapter à la teneur totale en agents absorbants ajoutés :

| | |
|---|---|
| $SiO_2$ | 75,20 % |
| $SO_3$ | 0,30 % |
| $Al_2O_3$ | 0,64 % |
| CaO | 9,48 % |
| MgO | 0,20 % |
| $Na_2O$ | 13,60 % |

(suite)

| K$_2$O | 0,35 % |
|---|---|

Les verres obtenus à partir des compositions selon l'invention sont compatibles avec les techniques habituelles de fabrication du verre plat. L'épaisseur du ruban de verre obtenu par nappage du verre en fusion sur un bain d'étain peut varier entre 0,8 et 10 mm, de préférence entre 3 et 5 mm, pour les vitrages automobiles et entre 5 et 10 mm pour les vitrages destinés au bâtiment.

Le vitrage obtenu par la découpe du ruban de verre peut subir ultérieurement une opération de bombage et/ou de trempe, notamment lorsqu'il s'agit d'un vitrage automobile. Il peut également subir d'autres opérations de traitement ultérieures, par exemple visant à le revêtir d'une ou plusieurs couches d'oxydes métalliques en vue de réduire son échauffement par le rayonnement solaire et par voie de conséquence de réduire celui de l'habitacle d'un véhicule qui en est pourvu.

**TABLEAU 2 (verres à 3,85 mm)**

|  | 3 | 4 | 5 | 6 | 7 | 8 | 9 | 10 | 11 | 12 | 13 |
|---|---|---|---|---|---|---|---|---|---|---|---|
| Fe$_2$O$_3$ (%) | 1,10 | 1,13 | 0,96 | 1,17 | 1,27 | 1,35 | 1,48 | 0,87 | 1,04 | 1,07 | 0,98 |
| Redox | 0,20 | 0,19 | 0,23 | 0,18 | 0,17 | 0,19 | 0,15 | 0,22 | 0,19 | 0,19 | 0,21 |
| CeO$_2$ (%) | 0,45 | 0,85 | 0,60 | 0,60 | 0,55 | 0,25 | 0,31 | 0,85 | 0,65 | 0,85 | 0,75 |
| TLA (%) | 70,7 | 70,5 | 71,6 | 70,4 | 69,5 | 66,9 | 67,9 | 73,6 | 72,2 | 71,6 | 72,1 |
| TE (%) | 42,8 | 42,7 | 43,5 | 42,7 | 42,0 | 38,1 | 40,6 | 46,6 | 45,3 | 44,2 | 44,5 |
| TUV (%) | 11,8 | 9,5 | 13,3 | 9,9 | 8,7 | 9,2 | 6,9 | 13,1 | 11,5 | 10,2 | 12,0 |
| Sélectivité | 1,65 | 1,65 | 1,65 | 1,65 | 1,66 | 1,76 | 1,67 | 1,58 | 1,60 | 1,62 | 1,62 |

**TABLEAU 3 (verres à 3,15 mm)**

|  | 14 | 15 | 16 | 17 | 18 | 19 | 20 | 21 | 22 | 23 |
|---|---|---|---|---|---|---|---|---|---|---|
| Fe$_2$O$_3$ (%) | 1,36 | 1,40 | 1,43 | 1,11 | 1,51 | 1,58 | 1,34 | 1,29 | 1,27 | 1,05 |
| Redox | 0,20 | 0,19 | 0,20 | 0,23 | 0,18 | 0,17 | 0,20 | 0,19 | 0,20 | 0,22 |
| CeO$_2$ (%) | 0,40 | 0,59 | 0,47 | 0,95 | 0,30 | 0,80 | 0,65 | 0,57 | 0,98 | 0,98 |
| TLA (%) | 70,2 | 70,2 | 69,3 | 72,2 | 68,8 | 68,2 | 70,3 | 71,9 | 71,4 | 73,6 |
| TE (%) | 42,3 | 42,6 | 41,2 | 44,4 | 41,4 | 40,8 | 42,3 | 45,0 | 44,0 | 46,8 |
| TUV (%) | 11,2 | 9,8 | 10,0 | 12,3 | 9,2 | 7,0 | 10,5 | 11,2 | 10,0 | 12,8 |
| Sélectivité | 1,66 | 1,65 | 1,68 | 1,63 | 1,66 | 1,66 | 1,66 | 1,60 | 1,62 | 1,57 |

**TABLEAU 4 (verres à 4,85 mm)**

|  | 24 | 25 | 26 | 27 | 28 | 29 | 30 | 31 | 32 | 33 |
|---|---|---|---|---|---|---|---|---|---|---|
| Fe$_2$O$_3$ (%) | 0,88 | 0,92 | 0,95 | 1,02 | 1,05 | 0,80 | 1,14 | 0,86 | 0,82 | 0,83 |
| Redox | 0,20 | 0,19 | 0,19 | 0,17 | 0,20 | 0,21 | 0,16 | 0,19 | 0,22 | 0,19 |
| CeO$_2$ (%) | 0,54 | 0,70 | 0,35 | 0,75 | 0,42 | 0,74 | 0,30 | 0,9 | 0,41 | 0,65 |
| TLA (%) | 70,7 | 70,7 | 69,8 | 69,8 | 67,5 | 71,8 | 68,3 | 71,5 | 70,9 | 72,4 |
| TE (%) | 42,5 | 42,8 | 41,5 | 42,2 | 38,5 | 43,8 | 40,6 | 43,9 | 42,5 | 45,3 |
| TUV (%) | 11,4 | 9,8 | 11,5 | 8,1 | 9,5 | 11,5 | 8,4 | 9,7 | 13,6 | 11,4 |
| Sélectivité | 1,66 | 1,65 | 1,68 | 1,65 | 1,75 | 1,64 | 1,68 | 1,63 | 1,67 | 1,60 |

**Revendications**

1.  Composition de verre destinée à la fabrication de vitrages absorbant les radiations ultraviolettes et infrarouges, comprenant les oxydes ci-après, dans une teneur variant dans les limites pondérales suivantes :

| | |
|---|---|
| $SiO_2$ | 65 - 80 % |
| $Al_2O_3$ | 0 - 5 % |
| $B_2O_3$ | 0 - 5 % |
| CaO | 5 - 15 % |
| MgO | 0 - 2 % |
| $Na_2O$ | 9 - 18 % |
| $K_2O$ | 0 - 10 % |
| BaO | 0 - 5 % |

**caractérisée en ce qu'**elle comprend en outre les agents absorbants ci-après dans une teneur variant dans les limites pondérales suivantes :

| | |
|---|---|
| $Fe_2O_3$ (fer total) | 0,7 à 1,6 % |
| $CeO_2$ | 0,1 à 1,2 % |

le verre présentant un facteur redox, défini comme la quantité massique de fer ferreux exprimée en FeO rapportée à la quantité massique de fer total exprimée en $Fe_2O_3$, inférieur ou égal à 0,19, le verre étant exempt d'oxyde de tungstène $WO_3$, et la teneur en oxyde de titane ne dépassant pas 0,1%,
et le verre présentant, pour une épaisseur de 3 à 5 mm, une transmission lumineuse ($TL_A$) supérieure ou égale à 65 %, une transmission énergétique (TE) inférieure ou égale à 46 % et une transmission ultraviolette (TUV) au plus égale à 14 %.

2.  Composition de verre selon la revendication 1, **caractérisée en ce que** la sélectivité du verre pour une épaisseur variant de 3 à 5 mm est égale ou supérieure à 1,60.

3.  Composition de verre selon l'une des revendications 1 ou 2, **caractérisée en ce que** la somme des teneurs en oxydes de sodium et de potassium ($Na_2O+K_2O$) est inférieure ou égale à 15 %.

4.  Composition de verre selon l'une des revendications 1 à 3, **caractérisée en ce que** la teneur en $CeO_2$ est inférieure ou égale à 0,9 %.

5.  Composition de verre selon l'une des revendications 1 à 4, **caractérisée en ce qu'**elle est exempte d'oxyde de titane.

6.  Composition de verre selon l'une des revendications 1 à 5, **caractérisée en ce que** la teneur totale en oxyde de fer ($Fe_2O_3$) est supérieure à 0,8 %, avantageusement inférieure ou égale à 1,3 %, et mieux encore inférieure ou égale à 0,95 %.

7.  Composition de verre selon l'une des revendications 1 à 3 et 5, **caractérisée en ce qu'**elle comprend :

| | |
|---|---|
| $Fe_2O_3$ (fer total) | 1,0 à 1,4 % |
| $CeO_2$ | 0,4 à 1,2 % |

et qu'elle possède un redox allant de 0,15 à 0,19.

8.  Composition de verre selon la revendication 7, **caractérisée en ce qu'**elle présente une transmission lumineuse $TL_A$ supérieure à 70 %, une transmission ultraviolette inférieure à 12 % et une sélectivité supérieure à 1,62 pour une épaisseur de l'ordre de 3,15 mm.

9.  Composition de verre selon l'une des revendications 1 à 3 et 5, **caractérisée en ce qu'**elle comprend :

$$Fe_2O_3 \text{ (fer total)} \quad 0,85 \text{ à } 1,2 \%$$
$$CeO_2 \quad 0,4 \text{ à } 1\%$$

et qu'elle possède un redox allant de 0,16 à 0,19.

10. Composition de verre selon la revendication 9, **caractérisée en ce qu'**elle présente une transmission lumineuse $TL_A$ supérieure à 70 %, une transmission ultraviolette inférieure à 12 % et une sélectivité supérieure à 1,62 pour une épaisseur de l'ordre de 3,15 mm.

11. Composition de verre selon l'une des revendications 1 à 3 et 5, **caractérisée en ce qu'**elle comprend :

$$Fe_2O_3 \text{ (fer total)} \quad 0,7 \text{ à } 0,95 \%$$
$$CeO_2 \quad 0,3 \text{ à } 1 \%$$

et qu'elle possède un redox allant de 0,18 à 0,19.

12. Composition de verre selon la revendication 11, **caractérisée en ce qu'**elle présente une transmission lumineuse $TL_A$ supérieure à 70 %, une transmission ultraviolette inférieure à 12 % et une sélectivité supérieure à 1,62 pour une épaisseur de l'ordre de 4,85 mm.

13. Feuille de verre de composition selon l'une des revendications 1 à 12.

14. Vitrage, notamment pour automobile comprenant au moins une feuille de verre présentant la composition selon l'une des revendications 1 à 12.

**Patentansprüche**

1. Glaszusammensetzung zur Herstellung von Ultraviolett- und Infrarotstrahlung absorbierender Verglasung, die folgende Oxide mit einem Gehalt umfasst, der innerhalb der folgenden Gewichtsgrenzen variiert:

$$SiO_2 \quad 65 - 80 \%$$
$$Al_2O_3 \quad 0 - 5 \%$$
$$B_2O_3 \quad 0 - 5 \%$$
$$CaO \quad 5 - 15 \%$$
$$MgO \quad 0 - 2 \%$$
$$Na_2O \quad 9 - 18 \%$$
$$K_2O \quad 0 - 10 \%$$
$$BaO \quad 0 - 5 \%$$

**dadurch gekennzeichnet, dass** es auch die folgenden Absorptionsmittel mit einem Gehalt umfasst, der innerhalb der folgenden Gewichtsgrenzen variiert:

$$Fe_2O_3 \text{ (Gesamteisen)} \quad 0,7 \text{ bis } 1,6 \%$$
$$CeO_2 \quad 0,1 \text{ bis } 1,2 \%$$

wobei das Glas einen Redoxfaktor aufweist, definiert als die Massenmenge an Eisen(II), ausgedrückt als FeO, bezogen auf die Massenmenge an Gesamteisen, ausgedrückt in $Fe_2O_3$, kleiner oder gleich 0,19, wobei das Glas frei von Wolframoxid $WO_3$ ist und der Gehalt an Titanoxid 0,1 % nicht überschreitet, und wobei das Glas für eine Dicke von 3 bis 5 mm eine Lichtdurchlässigkeit ($TL_A$) von mehr als oder gleich 65 %, eine Energiedurchlässigkeit (TE) von kleiner als oder gleich 46 % und eine Ultraviolettdurchlässigkeit (TUV) höchstens gleich 14 % aufweist.

2. Glaszusammensetzung nach Anspruch 1, **dadurch gekennzeichnet, dass** die Selektivität des Glases für eine Dicke, die zwischen 3 und 5 mm variiert, gleich oder größer als 1,60 ist.

3. Glaszusammensetzung nach einem der Ansprüche 1 oder 2, **dadurch gekennzeichnet, dass** die Summe der Gehalte an Natrium- und Kaliumoxiden ($Na_2O+K_2O$) kleiner oder gleich 15 % ist.

4. Glaszusammensetzung nach einem der Ansprüche 1 bis 3, **dadurch gekennzeichnet, dass** der $CeO_2$-Gehalt kleiner oder gleich 0,9 % ist.

5. Glaszusammensetzung nach einem der Ansprüche 1 bis 4, **dadurch gekennzeichnet, dass** sie frei von Titanoxid ist.

6. Glaszusammensetzung nach einem der Ansprüche 1 bis 5, **dadurch gekennzeichnet, dass** der Gesamtgehalt an Eisenoxid ($Fe_2O_3$) größer als 0,8 %, vorteilhafterweise kleiner oder gleich 1,3 % und besser noch kleiner als oder gleich 0,95 % ist.

7. Glaszusammensetzung nach einem der Ansprüche 1 bis 3 und 5, **dadurch gekennzeichnet, dass** sie umfasst:

| | |
|---|---|
| $Fe_2O_3$ (Gesamteisen) | 1,0 bis 1,4 % |
| $CeO_2$ | 0,4 bis 1,2 % |

und dass sie ein Redox im Bereich von 0,15 bis 0,19 aufweist.

8. Glaszusammensetzung nach Anspruch 7, **dadurch gekennzeichnet, dass** sie eine Lichtdurchlässigkeit $TL_A$ von mehr als 70 %, eine Ultraviolettdurchlässigkeit von kleiner als 12 % und eine Selektivität von mehr als 1,62 für eine Dicke in der Größenordnung von 3,15 mm aufweist.

9. Glaszusammensetzung nach einem der Ansprüche 1 bis 3 und 5, **dadurch gekennzeichnet, dass** sie umfasst:

| | |
|---|---|
| $Fe_2O_3$ (Gesamteisen) | 0,85 bis 1,2 % |
| $CeO_2$ | 0,4 bis 1 % |

und dass sie ein Redox im Bereich von 0,16 bis 0,19 aufweist.

10. Glaszusammensetzung nach Anspruch 9, **dadurch gekennzeichnet, dass** sie eine Lichtdurchlässigkeit $TL_A$ von mehr als 70 %, eine Ultraviolettdurchlässigkeit von kleiner als 12 % und eine Selektivität von mehr als 1,62 für eine Dicke in der Größenordnung von 3,15 mm aufweist.

11. Glaszusammensetzung nach einem der Ansprüche 1 bis 3 und 5, **dadurch gekennzeichnet, dass** sie umfasst:

| | |
|---|---|
| $Fe_2O_3$ (Gesamteisen) | 0,7 bis 0,95 % |
| $CeO_2$ | 0,3 bis 1 % |

und dass sie ein Redox im Bereich von 0,18 bis 0,19 aufweist.

12. Glaszusammensetzung nach Anspruch 11, **dadurch gekennzeichnet, dass** sie eine Lichtdurchlässigkeit $TL_A$ von mehr als 70 %, eine Ultraviolettdurchlässigkeit von kleiner als 12 % und eine Selektivität von mehr als 1,62 für eine Dicke in der Größenordnung von 4,85 mm aufweist.

13. Glasscheibe mit einer Zusammensetzung nach einem der Ansprüche 1 bis 12.

14. Verglasung, insbesondere für ein Kraftfahrzeug, umfassend mindestens eine Glasscheibe, die die Zusammensetzung nach einem der Ansprüche 1 bis 12 aufweist.

**Claims**

1. A glass composition intended for the manufacture of windows that absorb ultraviolet and infrared radiation, comprising the oxides below, in contents varying within the following limits by weight:

| | |
|---|---|
| $SiO_2$ | 65-80% |
| $Al_2O_3$ | 0-5% |
| $B_2O_3$ | 0-5% |
| CaO | 5-15% |
| MgO | 0-2% |
| $Na_2O$ | 9-18% |
| $K_2O$ | 0-10% |
| BaO | 0-5% |

**characterized in that** it additionally comprises the absorbent agents below, in contents varying within the following limits by weight:

| | | |
|---|---|---|
| $Fe_2O_3$ (total iron) | 0.7 | to 1.6% |
| $CeO_2$ | | 0.1 to 1.2% |

the glass having a redox factor, defined as the ratio by weight of ferrous iron expressed as FeO to the amount by weight of total iron expressed as $Fe_2O_3$, of 0.19 or less, the glass containing no tungsten oxide $WO_3$, and the titanium oxide content not exceeding 0.1%,
and the glass having, for a thickness of 3 to 5 mm, a light transmission ($TL_A$) of 65% or higher, an energy transmission (TE) of 46% or less and an ultraviolet transmission TUV not exceeding 14%.

2. The glass composition as claimed in claim 1, **characterized in that** the selectivity of the glass for a thickness varying from 3 to 5 mm is 1.60 or higher.

3. The glass composition as claimed in one of claims 1 or 2, **characterized in that** the sum of the contents of sodium and potassium oxides ($Na_2O + K_2O$) is 15% or less.

4. The glass composition as claimed in one of claims 1 to 3, **characterized in that** the $CeO_2$ content does not exceed 0.9%.

5. The glass composition as claimed in one of claims 1 to 4, **characterized in that** it contains no titanium oxide.

6. The glass composition as claimed in one of claims 1 to 5, **characterized in that** the iron oxide content ($Fe_2O_3$) is at least 0.8% but advantageously at most 1.3% and better still at most 0.95%.

7. The glass composition as claimed in one of claims 1 to 3, **characterized in that** it includes:

| | |
|---|---|
| $Fe_2O_3$ (total iron) | 1.0 to 1.4% |
| $CeO_2$ | 0.4 to 1.2% |

and **in that** it possesses a redox ranging from 0.15 to 0.19.

8. The glass composition as claimed in claim 7, **characterized in that** it has a light transmission $TL_A$ of greater than 70%, an ultraviolet transmission of less than 12% and a selectivity of greater than 1.62 for a thickness of around 3.15 mm.

9. The glass composition as claimed in one of claims 1 to 3 and 5, **characterized in that** it includes:

| | |
|---|---|
| $Fe_2O_3$ (total iron) | 0.85 to 1.2% |
| $CeO_2$ | 0.4 to 1% |

and **in that** it possesses a redox ranging from 0.16 to 0.19.

**10.** The glass composition as claimed in claim 9, **characterized in that** it has a light transmission $TL_A$ of greater than 70%, an ultraviolet transmission of less than 12% and a selectivity of greater than 1.62 for a thickness of around 3.15 mm.

**11.** The glass composition as claimed in one of claims 1 to 3 and 5, **characterized in that** it includes:

$Fe_2O_3$ (total iron)  0.7 to 0.95%
$CeO_2$  0.3 to 1%

and **in that** it possesses a redox ranging from 0.18 to 0.19.

**12.** The glass composition as claimed in claim 11, **characterized in that** it has a light transmission $TL_A$ of greater than 70%, an ultraviolet transmission of less than 12% and a selectivity of greater than 1.62 for a thickness of around 4.85 mm.

**13.** A glass sheet of composition as claimed in one of claims 1 to 12.

**14.** A window, especially for an automobile, comprising at least one glass sheet having the composition as claimed in one of claims 1 to 12.

**EP 1 846 341 B1**

## RÉFÉRENCES CITÉES DANS LA DESCRIPTION

**Documents brevets cités dans la description**

- WO 9107356 A
- EP 469446 A
- WO 9414716 A
- US 6133179 A